(19) **Europäisches Patentamt / European Patent Office / Office européen des brevets**

(11) **EP 1 558 525 B1**

(12) **FASCICULE DE BREVET EUROPEEN**

(45) Date de publication et mention de la délivrance du brevet:
**25.04.2007 Bulletin 2007/17**

(51) Int Cl.:
*C01F 7/06* *(2006.01)*    *B01D 21/01* *(2006.01)*

(21) Numéro de dépôt: **03778413.9**

(22) Date de dépôt: **21.10.2003**

(86) Numéro de dépôt international:
**PCT/FR2003/003104**

(87) Numéro de publication internationale:
**WO 2004/039729 (13.05.2004 Gazette 2004/20)**

(54) **PROCEDE D ATTAQUE DE LA BAUXITE AMELIORANT LA FILTRABILITE D ES BOUES EN SORTIE D ATTAQUE**

VERFAHREN ZUR VERBESSERUNG DER FILTRIERBARKEIT VON BAUXIT

METHOD FOR ATTACKING BAUXITE ENHANCING FILTERABILITY OF SLUDGE IN ATTACK OUTPUT

(84) Etats contractants désignés:
**AT BE BG CH CY CZ DE DK EE ES FI FR GB GR HU IE IT LI LU MC NL PT RO SE SI SK TR**

(30) Priorité: **25.10.2002 FR 0213408**

(43) Date de publication de la demande:
**03.08.2005 Bulletin 2005/31**

(73) Titulaire: **ALUMINIUM PECHINEY**
**75218 Paris Cedex 16 (FR)**

(72) Inventeurs:
• **MUGNIER, Nicolas**
  **4680 Gladstone,**
  **Queensland (AU)**

• **LEIZOUR, Patrick**
  **F-13090 Aix en provence (FR)**

(74) Mandataire: **Fénot, Dominique**
  **Pechiney,**
  **217 cours Lafayette**
  **69451 Lyon Cedex 06 (FR)**

(56) Documents cités:
  WO-A-99/30794        WO-A-99/61129
  FR-A- 2 771 081

• "Prodn. of alumina hydrate - from bayer process sodium aluminate liquors obtd. from bauxite digestion" DERWENT, XP002244797

## Description

L'invention concerne le traitement de bauxites par attaque alcaline, typiquement suivant le procédé Bayer, permettant d'obtenir de l'hydrate d'alumine. Plus particulièrement, elle concerne le traitement de bauxites contenant de l'alumine principalement sous forme de gibbsite ou de bauxites mixtes contenant du trihydrate d'alumine tel que la gibbsite et du monohydrate d'alumine tel que la boehmite.

## ETAT DE LA TECHNIQUE

Le procédé Bayer largement décrit dans la littérature spécialisée constitue la technique principale de production l'alumine destinée à être transformée en aluminium par électrolyse ignée. Selon ce procédé, le minerai de bauxite est traité à chaud au moyen d'une solution aqueuse d'hydroxyde de sodium à concentration appropriée provoquant ainsi la solubilisation d'une solution sursaturée d'aluminate de sodium. Après séparation de la phase solide constituant le résidu inattaqué (boues rouges) du minerai, la solution sursaturée d'aluminate de sodium est ensemencée avec des particules de trihydrate d'alumine dans le but de provoquer la précipitation du trihydrate d'alumine. La liqueur d'aluminate de sodium, une fois appauvrie en alumine après la phase de précipitation du trihydrate d'alumine est recyclée vers l'attaque de la bauxite après avoir été éventuellement concentrée et/ou rechargée en hydroxyde de sodium pour constituer une liqueur ayant une concentration caustique appropriée pour ladite attaque.

La rapidité avec laquelle s'effectue la séparation entre les résidus insolubles et la liqueur sursaturée est essentielle puisqu'elle détermine le rendement et la productivité du procédé.

Dans les débuts de l'industrie de l'alumine, la séparation des résidus insolubles était effectuée par filtration, sur filtre-presse. Cette technique, bien qu'encore évoquée dans la plupart des brevets concernant le traitement des boues rouges, n'est plus utilisée que dans des cas exceptionnels, au profit de la sédimentation, réalisée en décanteurs à marche continue. La séparation par décantation des résidus insolubles permet en effet de traiter en continu des flux importants avec des coûts de fonctionnement faibles.

La filtration est parfois utilisée après attaque de bauxites à très haute teneur en hydrate d'aluminium. Elle est souvent utilisée après décantation (filtration de sécurité). Dans ces deux cas, on utilise des filtres de type Kelly qui sont des filtres destinés à équiper des cuves à l'intérieur desquelles des aménagements mobiles de cadres métalliques supportent les surfaces filtrantes.

De nombreuses tentatives ont été effectuées pour réaliser la séparation des boues sur des filtres rotatifs, sous vide ou sous pression. Les filtres rotatifs présentent l'avantage de fonctionner en continu: ils retiennent les parties solides et sont nettoyés régulièrement par application d'une différence de pression entre les deux parois du filtre. Ces tentatives n'ont malheureusement pas abouti par suite de la grande imperméabilité des gâteaux de boues rouges qui réduit rapidement le débit et rend le lavage très difficile. La filtrabilité s'est encore aggravée lorsque l'on a introduit un traitement de dessilicatation préalable à l'attaque de bauxites à gibbsite à faible teneur en silice, c'est-à-dire des bauxites contenant moins de 2,5 % de silice réactive. La silice réactive est une silice sous forme de silicate d'alumine ou de toute autre forme facilement soluble dans une liqueur d'aluminate de sodium telle que celle utilisée dans le procédé Bayer. Un document tel que FR2 732 332 décrit cette étape particulière du procédé Bayer que l'on appelle "prédessilicatation" et dans laquelle la bauxite broyée est dessilicatée préalablement à son attaque par la liqueur d'aluminate.

On connaît notamment par EP 1 051 227, EP 1 089 797, WO93/06046 et EP 0 616 882 des procédés dans lesquels on verse des additifs de type floculants dans la suspension d'attaque pour augmenter la vitesse avec laquelle la séparation liquide /solide s'effectue. De telles techniques sont bien adaptées pour accélérer la séparation par décantation mais se révèlent peu efficaces en ce qui concerne l'amélioration de la filtrabilité des suspensions.

On connaît par US 5 716 530 et US 4 446 117 des procédés décrivant l'utilisation de filtres sables en présence d'additifs tels que des biopolymères (biocarbohydrates tels que dextran) ou de filtres sables munis de toiles synthétiques. Mais ces documents décrivent une étape située à un stade différent du cycle Bayer, en l'occurrence la filtration de sécurité effectuée après décantation sur la surverse des décanteurs, c'est-à-dire sur des clairs contenant une très faible quantité de fines particules en suspension. De telles techniques ne peuvent être appliquées à la séparation liquide - solide des suspensions en sortie d'attaque en raison de l'augmentation considérable de la surface de filtration qui serait nécessaire et de la dégradation importante de productivité qui en résulterait.

On connaît par US 5 080 803 (ALCAN) des dispositifs permettant de décanter des suspensions injectées sous pression. Même si de tels dispositifs permettent d'obtenir une certaine diminution du temps de séjour pendant la phase de séparation liquide - solide, celle-ci reste encore une étape relativement longue, ce qui impose des volumes à traiter importants (installations industrielles imposantes, décanteurs de plusieurs dizaines de mètres de diamètre, ...), et ce qui augmente le risque de rétrogradation. La rétrogradation est un phénomène à éviter car elle se traduit par la précipitation prématurée du trihydrate d'alumine, qui se mélange aux résidus insolubles et est mis en décharge avec eux.

Pour diminuer les risques de rétrogradation dus à un temps de séjour important, il faut limiter la sursaturation de la liqueur d'aluminate en alumine dissoute exprimée par le rapport Rp

$$R_p = \frac{\text{concentration en } Al_2O_3 \text{ dissoute (en } g \text{ / } l)}{\text{concentration en } Na_2O \text{ caustique (en } g \text{ / } l)}$$

et la productivité de la liqueur, proportionnelle à ce rapport, s'en trouve réduite.

## PROBLEME POSE

La demanderesse a donc cherché à mettre au point un procédé industriel permettant d'obtenir une séparation liquide - solide efficace et rapide de la suspension en sortie d'attaque.

## OBJET DE L'INVENTION

L'objet selon l'invention est un procédé de traitement de la bauxite par attaque alcaline, typiquement suivant le procédé Bayer, permettant d'obtenir de l'hydrate d'alumine caractérisé en ce qu'on introduit la bauxite broyée directement dans une solution alcaline prélevée et destinée à être réintroduite dans le circuit Bayer de la liqueur d'aluminate, ladite solution alcaline étant portée à une température telle que, après mise en contact de ladite bauxite broyée et de ladite solution alcaline, la température de la suspension résultant de ce mélange est supérieure à une température proche de la température d'ébullition à la pression atmosphérique, c'est-à-dire typiquement supérieure à 95°C, et de préférence supérieure ou égale à la température d'ébullition à la pression atmosphérique.
La demanderesse a en effet constaté que les propriétés de filtrabilité des boues résultant de l'attaque alcaline sont très fortement dégradées si on mélange la bauxite broyée dans ladite solution alcaline à la température ambiante et si on maintient la suspension qui en résulte à une température voisine de la température ambiante même pendant un temps très court, typiquement limité à quelques minutes. Ce n'est que lorsque la température du premier contact entre la bauxite et la solution alcaline est supérieure à 60°C - 70°C environ, en tout cas supérieure à 95°C et plus particulièrement au-dessus de la température d'ébullition, que l'on constate une amélioration sensible de la filtrabilité. Celle-ci peut ainsi se traduire par une amélioration d'un facteur 100 (résistance spécifique divisée par 100) lorsque la température du mélange dépasse la température d'ébullition de la solution alcaline.
La solution alcaline utilisée dans l'invention est une solution alcaline prélevée ou destinée à être réintroduite dans le circuit de la liqueur d'aluminate utilisée dans le procédé Bayer: il peut s'agir d'une aliquote de la liqueur d'attaque (teneur en soude caustique comprise de préférence entre 120 et 180 g Na2O/l, typiquement 160 g Na2O/l), ladite aliquote ne dépassant pas de préférence 25%, encore mieux 20% du flux total, ou encore d'une aliquote d'un clair de laveur (c'est-à-dire le flux aqueux issu du lavage des résidus insolubles de l'attaque alcaline (boues rouges)), en particulier le clair du premier laveur(teneur en soude caustique comprise de préférence entre 40 et 120 g Na2O/l, typiquement 80 g Na2O/l).
La température à laquelle le mélange est effectué selon l'invention peut être la température de prédessilicatation si la composition de la bauxite impose un tel traitement (en général il s'agit d'une bauxite à basse teneur - typiquement moins de 2,5 % - en silice réactive). La température à laquelle la prédessilicatation est effectuée est en général comprise entre 80°C et 200°C. Pour les bauxites contenant essentiellement de la gibbsite, la température à laquelle le mélange est effectué selon l'invention est de préférence comprise entre 95°C et 108°C, ce qui permet de faire un traitement sous pression atmosphérique.
La température à laquelle le mélange est effectué selon l'invention peut être également être la température d'attaque, à savoir une température comprise entre 120°C et 200°C, de préférence entre 140 et 150°C, pour les bauxites contenant des trihydrates (bauxites à gibbsite ou attaque basse température des bauxites mixtes) ou une température supérieure à 200°C, typiquement entre 220°C et 260°C, pour les bauxites contenant des monohydrates (bauxites à boehmite ou à diaspore). L'attaque à haute température des bauxites mixtes, peut être effectuée après l'attaque basse température (voir par exemple FR 2 712 275) et dans ce cas la bauxite a déjà été mise en contact avec la liqueur d'aluminate. Mais, dans d'autre cas, elle est effectuée avant ou en parallèle avec l'attaque à basse température (voir par exemple FR 2 715 153) et dans ce cas, la solution proposée dans la présente invention peut être également avantageusement appliquée.
Si une prédessilicatation est effectuée et si la température choisie pour la prédessilicatation est supérieure à la température d'ébullition de la liqueur, cette étape doit, comme l'attaque, être réalisée en autoclave et la bauxite broyée doit être introduite dans l'autoclave sous pression. Qu'il y ait ou non prédessilicatation, l'important est que la suspension obtenue par injection de la bauxite broyée dans la liqueur portée à température soit entraînée directement vers l'attaque sans passer par une phase de refroidissement à une température inférieure à 95°C.
La bauxite est broyée de préférence en voie humide pour faciliter son transfert vers les installations de dessilicatation ou d'attaque. Dans ce cas, le broyage est réalisé en présence d'eau ou, pour diminuer les flux en jeu, en présence d'une aliquote de la liqueur d'aluminate décomposée, mais celle-ci correspondant à une proportion comprise entre 4 et 15 %, de préférence entre 5 et 10% du flux total de la liqueur d'aluminate décomposée. De la sorte, cette faible proportion de la liqueur d'aluminate décomposée, maintenue très peu de temps en contact avec la bauxite broyée avant sa mise en température, ne modifie pas le résultat global observé dans le cadre de cette invention, à savoir une nette amélioration de la filtrabilité des boues lorsqu'on met la bauxite directement en présence d'une solution dont la température est telle que la suspension après mélange soit à une température supérieure à 95°C.

Dans une modalité préférée de l'invention, la bauxite humide ainsi obtenue est portée à la température visée (prédessilicatation ou attaque), par exemple à l'aide de la vapeur extraite des dispositifs de détente lorsque l'attaque est faite sous pression, avant d'être introduite dans les bacs ou autoclaves destinés à la prédessilicatation ou à l'attaque. On peut également envisager de broyer la bauxite par voie humide et sous pression, c'est-à-dire en présence d'une aliquote de la liqueur d'aluminate décomposée et à une température supérieure à la température d'ébullition (sous pression atmosphérique) de ladite liqueur.

Dans les cas nécessitant une prédessilicatation (bauxite à basse teneur en silice réactive), on mélange la bauxite broyée avec une aliquote soit de la liqueur décomposée, soit du clair de premier laveur de telle sorte que l'on obtienne une suspension ayant une teneur en matière sèche comprise entre 200 et 1000 g/l. La durée du traitement de prédessilicatation et son efficacité dépendent de la température à laquelle est maintenu le mélange ainsi obtenu, de la teneur en matière sèche et de la concentration en soude caustique et, évidemment, du seuil en concentration de silice visé. Ce dernier est généralement choisi de telle sorte que le rapport pondéral (silice soluble/Na2O caustique) soit au voisinage de 0,7 %. Elle peut typiquement varier entre une dizaine de minutes pour un mélange à 150°C avec un clair de premier laveur (concentration caustique de l'ordre de 40 g Na2O/l) conduisant à l'obtention d'une suspension ayant une teneur en matière sèche de 1000g/l à 8 heures environ pour un mélange à 100°C avec une aliquote de liqueur d'attaque (concentration caustique de l'ordre de 160 g Na2O/l) conduisant à l'obtention d'une suspension ayant une teneur en matière sèche de 200g/l.

Avant attaque, la suspension doit avoir une teneur initiale en matière sèche typique de l'ordre de 200 g/l. Il est donc en général nécessaire de diluer la suspension issue du traitement de dessilicatation pour diminuer sa teneur en matière sèche. Si l'on veut conserver l'effet bénéfique sur la filtrabilité dû au mélange en température, cette dilution doit se faire également à une température supérieure à 95°C, de préférence à la température de la prédessilicatation, ou à une température intermédiaire entre la température de prédessilicatation et la température d'attaque.

L'attaque est réalisée en faisant passer la suspension dans un ou plusieurs bacs ou autoclaves en série. La suspension est portée à la température voulue puis maintenue le temps nécessaire pour que la quasi totalité du trihydrate contenu dans la bauxite soit solubilisée dans la liqueur d'aluminate. Un mode de réalisation particulier consiste à remplacer les bacs d'attaque en série par un réacteur tubulaire ou une série de réacteurs tubulaires: on peut ainsi agir localement sur une suspension plus homogène en température et en concentration des divers constituants dissous dans la solution alcaline. On contrôle ainsi mieux les profils de sursaturation des composés chimiques dissous, notamment de la silice, et, en provoquant la précipitation en un endroit précis du réacteur tubulaire, on contrôle mieux la taille des particules à filtrer.

En plus de l'amélioration nette de la filtrabilité des boues ainsi obtenues, on constate également que la vitesse de sédimentation de ces boues est grandement améliorée.

On peut donc remplacer les dispositifs volumineux de décantation des résidus insolubles de l'art antérieur par des dispositifs de filtration. Si l'attaque se fait sous pression, la paroi filtrante peut être avantageusement installée dans le circuit de détente de façon à pouvoir bénéficier de l'énergie motrice offerte par la différence de pression existant de part et d'autre de la paroi du filtre. Mais, le remplacement des installations existantes par des filtres nécessitant des investissements importants, on peut utiliser l'amélioration de la vitesse de sédimentation en employant des décanteurs classiques en moins grand nombre ou encore de nouveaux décanteurs moins volumineux (décanteurs en pression atmosphérique ou décanteurs sous pression).

**Exemples - Essais mettant en évidence l'amélioration de la filtrabilité.**

Les exemples qui suivent s'appuient sur une attaque sous moyenne pression de bauxites contenant du trihydrate d'alumine principalement sous forme de gibbsite. Dans le premier cas, il s'agit d'une bauxite indienne comprenant essentiellement de la gibbsite. Dans le second cas, il s'agit d'une bauxite africaine comprenant 86% de gibbsite et 14% de boehmite. Dans les deux cas, l'attaque est effectuée à une température voisine de 145°C pendant 10 minutes environ. La suspension est ensuite filtrée en imposant une différence de pression constante de 4 bars de part et d'autre du filtre. La résistance spécifique a du gâteau de filtration est calculée en utilisant la formule suivante issue du "Guide de la séparation solide-liquide" (P.Rivet - Société Française de filtration IDEXPO - Edition 81).

$$\alpha = \frac{2\Delta P \times \Omega^2}{\eta \times W \times V^2}\left(t - \frac{\eta \times R_s}{\Delta P \times \Omega}V\right)$$

où $\Delta P$ est la pression de filtration (ici 4 bars ou $4 \times 10^5$ Pa)

$t$ est le temps de filtration (s)

$\Omega$ est la surface filtrante exprimée en $m^2$

$\eta$ est la viscosité dynamique du filtrat exprimée en Pa.s ($10^3$ centipoises)

$V$ est le volume (en $m^3$) du filtrat recueilli au bout du temps $t$ exprimé en secondes

$W$ est la masse du gâteau séché, déposée par unité de volume du filtrat ($kg/m^3$)

$R_s$ est la résistance du support du filtre à l'écoulement par unité de surface; elle est obtenue en faisant écouler le filtrat au travers du support de surface $\Omega$ avec un débit $q$ et en mesurant la perte de charge $\Delta P'$ entre l'amont et l'aval du support du filtre; elle est alors égale à $\dfrac{\Delta P \times \Omega}{\eta \times q}$ et est exprimée en $m^{-1}$.

**Exemple 1**

Une liqueur d'aluminate de sodium industrielle de concentration 164g/l en Na2O caustique et de $R_P$=0.645 a été introduite dans un autoclave. Cet autoclave a été chauffé à 150°C. Une fois la température atteinte, une quantité de 300g de bauxite indienne à trihydrate pour 500 ml de liqueur a été introduite en température dans la liqueur. La bauxite peut être injectée sous pression. Dans le cadre de cet essai - qui fait intervenir de faibles volumes - on dispose à l'intérieur de l'autoclave, à température ambiante, la bauxite broyée dans une nacelle hors d'atteinte de la liqueur, on ferme l'autoclave et on porte l'ensemble à température. Une fois celle-ci atteinte, on renverse la nacelle de telle sorte que la bauxite broyée est mise en contact avec la liqueur.

Une prédessilicatation est effectuée en maintenant pendant 10 minutes sous pression à 150°C la suspension ainsi obtenue.

La suspension est ensuite diluée avec 500ml de la même liqueur d'aluminate au sein de l'autoclave et l'attaque est maintenue pendant 10 minutes à la même température. Cette dilution ainsi que la dissolution du trihydrate d'alumine résultant de l'attaque font baisser la teneur en matière sèche de 600 g/l à 50 g/l.

La suspension finale est ensuite filtrée afin d'estimer la résistance spécifique du solide filtré. La liqueur filtrée a une concentration caustique de 144 g Na2O / l et un rapport de sursaturation Rp égal à 1,33.

Le filtre employé est un filtre thermostaté avec membrane de filtration en PTFE (polytétrafluoroéthylène) de 90 mm. Les tests de filtration sont réalisés sous un mode de filtration frontal. La résistance spécifique calculée suivant la formule exposée ci-dessus est en moyenne égale à $1,2 \cdot 10^{11}$ m/kg. Elle est environ 25 fois plus faible que les résistances spécifiques des gâteaux obtenus avec le procédé de l'art antérieur, qui sont de l'ordre de $3.10^{12}$ m/kg.

Ce résultats de filtrabilité excellents se traduisent par une productivité d'extraction des boues en sortie d'attaque supérieure à 1 $m^3/m^2/h$.

**Exemple 2**

Une liqueur industrielle d'aluminate de sodium de concentration 165g/l en Na2O caustique et de $R_P$=0.71 a été introduite dans un autoclave. Cet autoclave a été chauffé à 150°C. Une fois la température atteinte, une quantité de 300g de bauxite mixte africaine pour 500 ml de liqueur a été introduite en température dans la liqueur.

Une prédessilicatation est effectuée en maintenant pendant 10 minutes sous pression à 150°C la suspension ainsi obtenue.

La suspension est ensuite diluée avec 500ml de la même liqueur d'aluminate au sein de l'autoclave et l'attaque est maintenue pendant 10 minutes à la même température. Cette dilution ainsi que la dissolution du trihydrate d'alumine résultant de l'attaque font baisser la teneur en matière sèche de 600 g/l à 50 g/l.

La suspension finale est ensuite filtrée afin d'estimer la résistance spécifique du solide filtré. La liqueur filtrée a une concentration caustique de 157 g Na2O / l et un rapport de sursaturation Rp égal à 1.065. Le Rp atteint est plus faible que dans l'exemple 1 car la boehmite n'est pas dissoute et sa présence favorise la rétrogradation.

La résistance spécifique calculée suivant la formule exposée ci-dessus est en moyenne égale à $8 \cdot 10^{10}$ m/kg. Elle est environ 40 fois plus faible que les résistances spécifiques des gâteaux obtenus avec le procédé de l'art antérieur.

## MODES DE REALISATION DE L'INVENTION

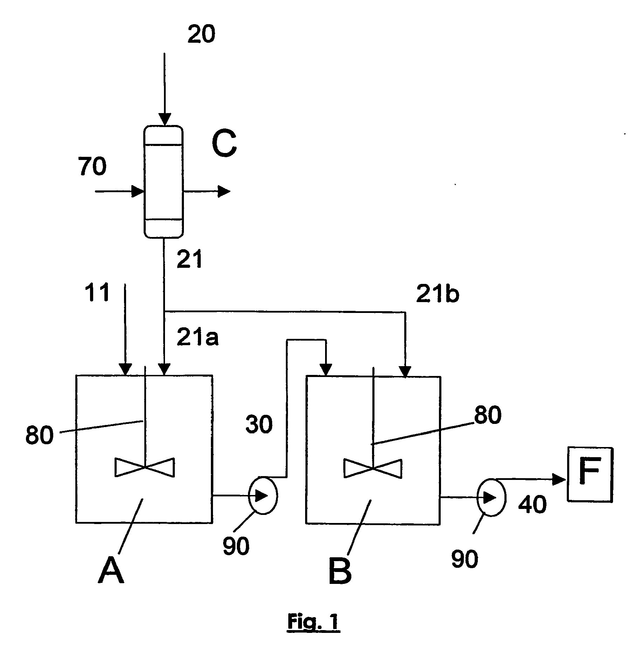

Les figures 1 à 5 présentent différentes variantes du procédé selon l'invention, toujours envisagé dans le cadre d'une attaque à moyenne pression à une température voisine de 145 °C précédée d'une dessilicatation à 140°C.

La figure 1 représente un premier mode de réalisation dans lequel la bauxite broyée **11** et une aliquote **21a** de la liqueur décomposée **20** chauffée et mise sous pression **(C)** sont introduites dans un premier autoclave **A** muni de moyens d'agitation **80**. La mise à température de la liqueur décomposée (liqueur d'attaque) **20** est obtenue grâce à la vapeur **70** provenant des bacs de détente. Evidemment, si les températures de dessilicatation et d'attaque sont nettement différentes, le moyen de chauffage C est dédoublé pour obtenir d'une part l'aliquote **21a** portée à la température de dessilicatation et d'autre part l'aliquote **21b** à la température de l'attaque.

La suspension résultant du mélange réalisé dans l'autoclave **A** subit un traitement de prédessilicatation grâce à un maintien sous agitation dans l'autoclave **A** pendant une heure. Dans l'autoclave **A,** la teneur en matière sèche de la suspension est comprise entre 200 et 1000g/l.

La suspension **30** est ensuite extraite à l'aide de moyens de pompage **90,** puis amenée vers l'autoclave d'attaque **B** où elle est injectée avec le reste de la liqueur décomposée **21b** préchauffée à la température d'attaque. Après un certain temps de maintien dans l'autoclave d'attaque, la suspension **40** est entraînée vers le dispositif de séparation liquide / solide **F.** De préférence, ce dispositif est un dispositif de filtration que l'on place dans une partie du circuit qui n'est pas encore à la pression atmosphérique, de telle sorte que l'on puisse obtenir une différence de pression au moins égale à 4 bars de part et d'autre de la membrane. De la sorte, on évite également le refroidissement de la liqueur et on diminue le risque de rétrogradation qui en résulte. Pour évacuer le plus rapidement possible le gâteau de filtration, on envisage l'emploi de filtres à débâtissage automatique.

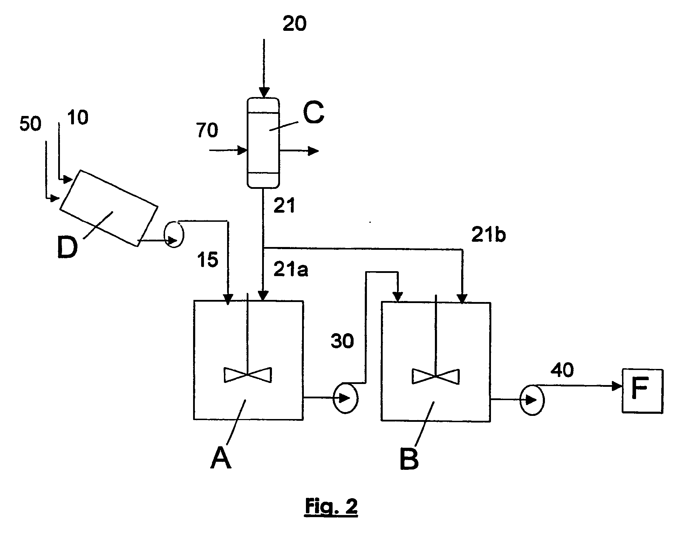

Dans l'exemple de la figure 1, la bauxite est broyée à sec puis est injectée dans l'autoclave A sous pression. Celui de la figure 2 diffère du précédent en ce qu'il permet d'utiliser le broyage par voie humide plus couramment utilisé ainsi que des technologies mieux connues d'injection de suspension sous pression: la bauxite **10** et l'eau **50** sont versées dans un broyeur **D,** la suspension **15** résultant de ce broyage humide est pompée et injectée sous pression dans l'autoclave **A.**

Toutefois, l'ajout d'eau dans l'exemple 2 entraîne une diminution de la concentration caustique, certes favorables à la dessilicatation mais nécessitant de surconcentrer l'aliquote **21b** en teneur caustique de façon à compenser la dilution de **21a** et obtenir au final une liqueur d'attaque à la concentration caustique voulue (environ 170 g Na2O/l). Il faut donc prévoir sur le circuit de l'aliquote **21b,** un dispositif supplémentaire d'évaporation (non illustré sur la figure 2) permettant d'obtenir la surconcentration caustique nécessaire.

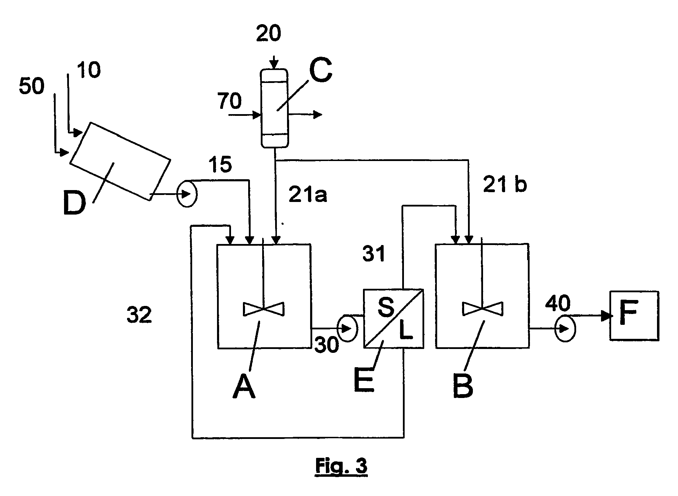

Le circuit de la figure 3 permet de résoudre le problème précédent avec un coût moindre: la suspension **30** est extraite à l'aide de moyens de pompage, puis amenée vers un dispositif de séparation liquide solide (filtre ou décanteur sous pression). Le filtrat est réintroduit dans l'autoclave **A** de dessilicatation et le solide est acheminé puis injecté vers l'autoclave d'attaque **B.**

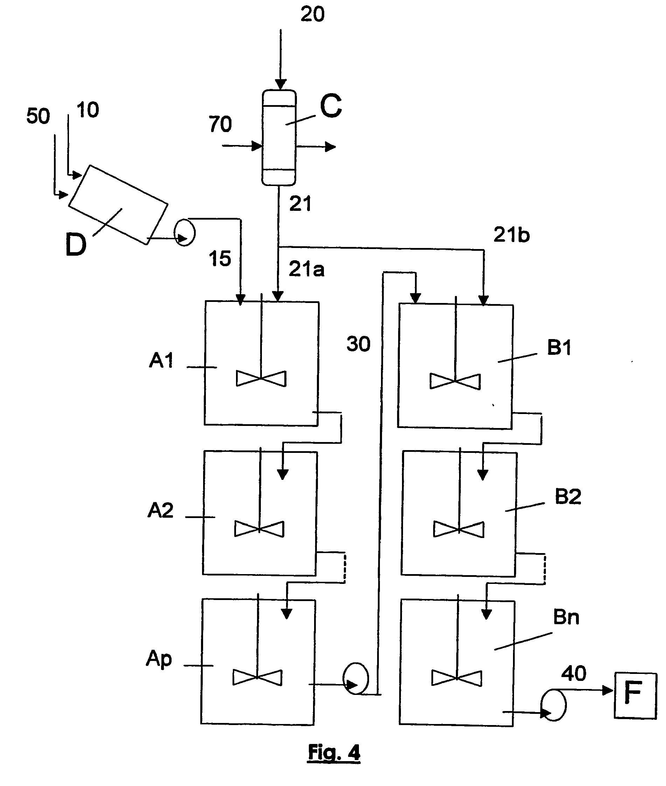

La figure 4 illustre une variante du procédé illustré en figure 2: l'autoclave de dessilicatation **A** est remplacé par une série de p autoclaves **A1, A2**, ...**Ap** dans chacun desquels les particules de la suspension circulent dans un milieu plus homogène en température: il est alors plus facile de contrôler la précipitation de la silice et de maîtriser la granulométrie des précipités obtenus. Plus ces précipités sont gros, plus il y a de chances d'obtenir en aval une suspension ayant des bonnes propriétés de filtrabilité.

L'autoclave **B** est également remplacé par une série d'autoclaves d'attaque **B1, B2, ...Bn.** Plusieurs autoclaves sont souvent nécessaires lorsqu'il s'agit d'atteindre des températures d'attaques assez élevées (plus de 200°C).

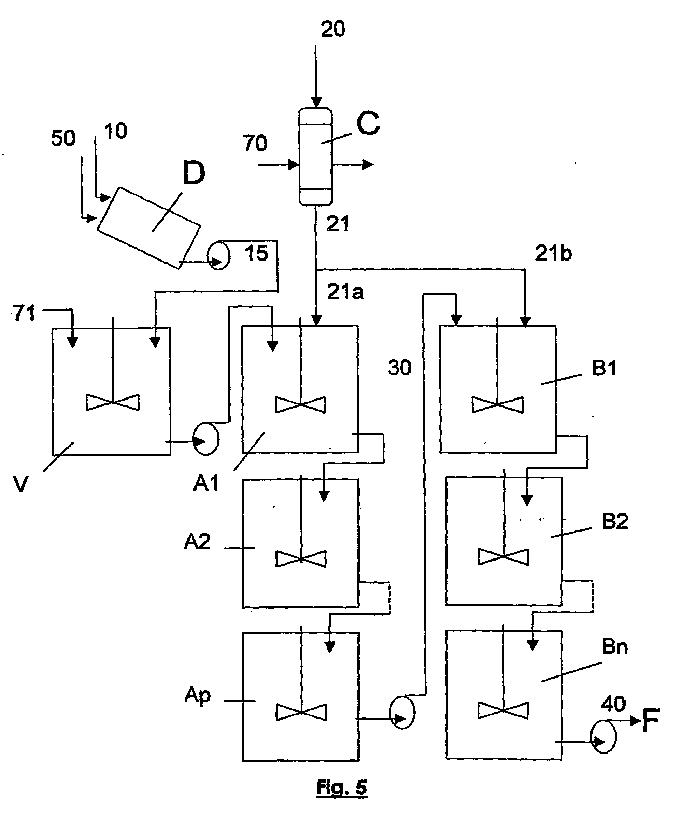

La figure 5 illustre un procédé proche de celui de la figure 4 dans lequel la bauxite broyée humide passe d'abord par un autoclave **V** dans lequel elle est portée à la température du premier autoclave **A1** de dessilicatation à l'aide la vapeur **71**. Cette vapeur peut provenir du circuit de détente ou encore d'un dispositif de refroidissement de l'aliquote **21a,** dans le cas où la température de dessilicatation et la température d'attaque sont différentes.

Tout ou partie de ces moyens supplémentaires illustrés par les figures 2 à 5 peuvent évidemment être combinés.

Un mode de réalisation particulier consiste à remplacer les bacs ou autoclaves en série par un réacteur tubulaire ou une série de réacteurs tubulaires: on peut ainsi agir localement sur une suspension plus homogène en température, qui contient une solution alcaline ayant une concentration plus homogène de ses divers constituants dissous.

On contrôle ainsi mieux les profils de sursaturation des composés chimiques dissous, notamment de la silice, et, en provoquant la précipitation en un endroit précis du réacteur tubulaire, on contrôle mieux la taille des précipités qui doivent être ensuite retenus par filtration.

L'optimisation de profils de température et des bilans thermiques au cours de la dessilicatation ou de l'attaque peut se faire en mettant des autoclaves en série, les autoclaves étant d'une part parcourus par la suspension et d'autre part réchauffés par de la vapeur issue de détendeurs mis en place au niveau de chaque réacteur (voir figure 1 de la demande française n° 02 00717 déposée le 21 janvier 2002). Dans chaque détendeur, la suspension finale obtenue en fin d'attaque subit une détente qui libère des calories et la vapeur issue du détendeur est utilisée pour réchauffer le réacteur correspondant.

On peut également envisager des échangeurs tubulaires avec trois parois cylindriques coaxiales, où la suspension finale circule d'un côté de la paroi intermédiaire, l'autre côté de la paroi étant en contact par la liqueur ou suspension à réchauffer et circulant à contre courant de la suspension finale.

**• AVANTAGES**

A production égale, remplacement des décanteurs par des installations de moindre ampleur (donc de moindre coût), diminution des flux à gérer

Risque de rétrogradation fortement diminué, ce qui permet d'augmenter la sursaturation de la liqueur après attaque, donc d'augmenter la productivité à la décomposition (ou encore, à productivité égale, de diminuer la concentration caustique de la liqueur)

**Revendications**

1. Procédé de traitement de la bauxite (10) par attaque alcaline, typiquement suivant le procédé Bayer, permettant d'obtenir de l'hydrate d'alumine **caractérisé en ce qu'**on introduit la bauxite broyée (11, 15) directement dans une solution alcaline (21a) prélevée et destinée à être réintroduite dans le circuit Bayer de la liqueur d'aluminate (20), ladite solution alcaline (21a) étant portée à une température telle que, après mise en contact de ladite bauxite broyée (11, 15) et de ladite solution alcaline, la température de la suspension résultant de ce mélange est supérieure à une température proche de la température d'ébullition à la pression atmosphérique, c'est-à-dire typiquement supérieure à 95°C.

2. Procédé de traitement de la bauxite (10) selon la revendication 1, dans lequel ladite solution alcaline est portée à une température telle que, après mise en contact de ladite bauxite broyée (11, 15) et de ladite solution alcaline, la température de la suspension résultant de ce mélange est supérieure ou égale à la température d'ébullition à la pression atmosphérique.

3. Procédé de traitement de la bauxite (10) selon la revendication 1 ou 2, dans lequel ladite bauxite est broyée en présence d'une aliquote représentant moins de 15%, de préférence moins de 10% de la liqueur d'attaque.

4. Procédé de traitement de la bauxite (10) selon l'une quelconque des revendications 1 à 3, dans lequel ladite bauxite broyée (11, 15) est préchauffée à une température voisine de celle à laquelle est portée ladite solution alcaline (21a).

5. Procédé de traitement de la bauxite (10) selon l'une quelconque des revendications 1 à 4, dans lequel ladite bauxite est broyée par broyage humide à une température supérieure à 95 °C.

6. Procédé de traitement de la bauxite (10) selon l'une quelconque des revendications 1 à 5, dans lequel ladite solution alcaline (21a) est une aliquote de la liqueur d'attaque ne dépassant pas 25%, de préférence 20% du flux total.

7. Procédé de traitement de la bauxite (10) selon l'une quelconque des revendications 1 à 5, dans lequel ladite solution alcaline (21a) est une aliquote d'un clair de laveur des résidus insolubles, typiquement le clair du premier laveur.

8. Procédé de traitement de la bauxite (10) selon l'une quelconque des revendications 1 à 7, dans lequel la suspension dessilicatée (30) subit une séparation liquide - solide, le liquide étant réintroduit vers le dispositif de dessilicatation (A) et le solide étant amené puis injecté dans le dispositif de l'attaque (B).

**Claims**

1. Process for the treatment of bauxite (10) by alkaline digestion, typically using the Bayer process in order to obtain alumina hydrate, **characterised in that** ground bauxite (11, 15) is added directly into an alkaline solution (21a) that is drawn off and that will be reinserted into the Bayer aluminate liquor circuit (20), the said alkaline solution (21a) being heated to a temperature such that after the said ground bauxite (11, 15) and the said alkaline solution have been brought into contact, the temperature of the slurry resulting from this mix is greater than a temperature close to the boiling temperature at atmospheric pressure, in other words typically greater than 95°C.

**2.** Process for the treatment of bauxite (10) according to claim 1, in which the said alkaline solution is heated to a temperature such that after the said ground bauxite (11, 15) and the said alkaline solution have been brought into contact, the temperature of the slurry resulting from this mix is greater than or equal to the boiling temperature at atmospheric pressure.

**3.** Process for the treatment of bauxite (10) according to either claim 1 or 2, in which the said bauxite is ground in the presence of an aliquot representing less than 15%, and preferably less than 10% of the green liquor.

**4.** Process for the treatment of bauxite (10) according to any of claims 1 to 3, in which the said ground bauxite (11, 15) is previously heated at a temperature close to the temperature to which the said alkaline solution (21a) is heated.

**5.** Process for the treatment of bauxite (10) according to any of claims 1 to 4, in which the said bauxite is wet ground at a temperature greater than 95%.

**6.** Process for the treatment of bauxite (10) according to any of claims 1 to 5, in which the said alkaline solution (21a) is an aliquot of the green liquor not exceeding 25% and even better not exceeding 20% of the total flow.

**7.** Process for the treatment of bauxite (10) according to any of claims 1 to 5, in which the said alkaline solution (21a) is an aliquot of a washer overflow, said washer being devoted to wash insoluble residues, typically the first washer overflow.

**8.** Process for the treatment of bauxite (10) according to any of claims 1 to 7, in which the desilicated suspension (30) is submitted to a liquid / solid separation, the liquid being added back into the desilication autoclave (A) and the solid is transferred and is then injected into the digester (B).

**Patentansprüche**

**1.** Verfahren zur Verarbeitung von Bauxit (10) durch alkalischen Aufschluss typischerweise nach dem Bayer-Verfahren zur Gewinnung von Aluminiumhydroxid, **dadurch gekennzeichnet, dass** der fein gemahlene Bauxit (11, 15) direkt in eine alkalische Lösung (21a) eingebracht wird, die der Aluminatlauge (20) des Bayer-Kreislaufs entnommen und wieder zurückgeführt wird, wobei die alkalische Lösung (21a) auf eine solche Temperatur erwärmt wird, dass nach Zusammenführung des fein gemahlenen Bauxits (11, 15) und der alkalischen Lösung die Temperatur der aus diesem Gemisch hervorgehenden Suspension höher ist als eine Temperatur nahe der Siedetemperatur bei Atmosphärendruck, d.h. typischerweise höher als 95°C.

**2.** Verfahren zur Verarbeitung von Bauxit (10) nach Anspruch 1, bei dem die alkalische Lösung auf eine solche Temperatur erwärmt wird, dass nach Zusammenführung des gemahlenen Bauxits (11, 15) und der alkalischen Lösung die Temperatur der aus diesem Gemisch hervorgehenden Suspension höher oder gleich der Siedetemperatur bei Atmosphärendruck ist.

**3.** Verfahren zur Verarbeitung von Bauxit (10) nach Anspruch 1 oder 2, bei dem der Bauxit in Gegenwart eines aliquoten Teils von weniger als 15 %, vorzugsweise weniger als 10 % der Aufschlusslauge fein gemahlen wird.

**4.** Verfahren zur Verarbeitung von Bauxit (10) nach irgendeinem der Ansprüche 1 bis 3, bei dem der fein gemahlene Bauxit (11, 15) auf eine Temperatur vorgewärmt wird, die nahe derjenigen ist, auf die die alkalische Lösung (21a) erwärmt wird.

**5.** Verfahren zur Verarbeitung von Bauxit (10) nach irgendeinem der Ansprüche 1 bis 4, bei dem der Bauxit durch Nassvermahlen bei einer Temperatur oberhalb 95°C fein gemahlen wird.

**6.** Verfahren zur Verarbeitung von Bauxit (10) nach irgendeinem der Ansprüche 1 bis 5, bei dem die alkalische Lösung (21a) eine aliquoter Teil der Aufschlusslauge ist, der 25 %, vorzugsweise 20 % des Gesamtstroms nicht überschreitet.

**7.** Verfahren zur Verarbeitung von Bauxit (10) nach irgendeinem der Ansprüche 1 bis 5, bei dem die alkalische Lösung (21a) ein aliquoter Teil einer geklärten Flüssigkeit eines Wäschers für den unlöslichen Rückstand ist, typischerweise der geklärten Flüssigkeit des ersten Wäschers.

**8.** Verfahren zur Verarbeitung von Bauxit (10) nach irgendeinem der Ansprüche 1 bis 7, bei dem die desilikatisierte Suspension (30) einer Fest/Flüssig-Trennung unterworfen wird, wobei Flüssigkeit zur Desilikatisierungsanlage (A) zurückgeführt wird und Feststoffe der Aufschlussanlage (B) zugeführt und eingeblasen werden.

**Fig. 1**

**Fig. 2**

**Fig. 3**

Fig. 4

**Fig. 5**